(19) **Europäisches Patentamt European Patent Office Office européen des brevets**

(11) **EP 3 922 946 B1**

(12) **FASCICULE DE BREVET EUROPEEN**

(45) Date de publication et mention de la délivrance du brevet:
**13.08.2025 Bulletin 2025/33**

(21) Numéro de dépôt: **21178263.6**

(22) Date de dépôt: **08.06.2021**

(51) Classification Internationale des Brevets (IPC):
**G01C 21/20** (2006.01)   **G08B 7/06** (2006.01)

(52) Classification Coopérative des Brevets (CPC):
**G01C 21/206**

(54) **PROCÉDÉ ET DISPOSITIF DE GUIDAGE D'UN INDIVIDU DANS UN ENVIRONNEMENT CONNECTÉ**

VERFAHREN UND VORRICHTUNG ZUR LENKUNG EINER PERSON IN EINER VERBUNDENEN UMGEBUNG

METHOD AND DEVICE FOR GUIDING AN INDIVIDUAL IN A CONNECTED ENVIRONMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2020 FR 2006075**

(43) Date de publication de la demande:
**15.12.2021 Bulletin 2021/50**

(73) Titulaire: **Orange**
**92130 Issy-les-Moulineaux (FR)**

(72) Inventeurs:
• **LACOCHE, Jeremy**
**92326 Chatillon Cedex (FR)**

• **FOULONNEAU, Anthony**
**92326 Chatillon Cedex (FR)**
• **VILLAIN, Eric**
**92326 Chatillon Cedex (FR)**
• **POIRIER, Fabrice**
**92326 Chatillon Cedex (FR)**

(74) Mandataire: **Plasseraud IP**
**104 Rue de Richelieu**
**CS92104**
**75080 Paris Cedex 02 (FR)**

(56) Documents cités:
**WO-A1-2015/082717      WO-A1-96/39687**
**DE-A1- 102009 031 019   US-A1- 2010 153 003**
**US-A1- 2011 022 201**

## Description

## Domaine technique

La présente demande concerne un procédé et un dispositif de guidage d'une personne à l'intérieur d'un environnement. L'environnement est typiquement un bâtiment, qui peut être de nature diverse, par exemple une usine, un immeuble de bureaux, un hôpital, etc.

## Technique antérieure

Dans des environnements de taille importante ou de géométrie complexe, il peut être difficile pour un individu de se repérer et de trouver facilement son chemin. Pour le guider, des plans sont couramment mis à disposition, qui requièrent de l'individu qu'il parvienne à se localiser sur le plan, à localiser sa destination, et à mémoriser un trajet le menant de sa localisation à sa destination. Si l'individu ne mémorise pas complètement le trajet, il faut que l'individu retrouve un autre plan et se localise à nouveau sur le plan.

Des solutions technologiques ont été proposées pour améliorer celle des plans se trouvant à des emplacements fixes dans l'environnement considéré. Par exemple, il est connu d'afficher sur un téléphone ou une tablette numérique un plan du lieu sur lequel est superposé le chemin à suivre, ou une direction à suivre pour arriver à destination. C'est le cas par exemple du document JP2011021971, qui décrit un procédé de guidage d'un individu dans un environnement intérieur basé sur la communication entre un terminal mobile de l'individu et des dispositifs de signalisation disposés dans l'environnement.

Il a également été proposé des dispositifs de réalité augmentée, comme par exemple des caques de réalité augmentée, permettant de superposer au monde réel des informations permettant de suivre un chemin jusqu'à la destination. Les informations peuvent par exemple être un marquage virtuel du sol. Des robots ont également été proposés pour guider un individu jusqu'à sa destination.

Toutes ces solutions ont pour inconvénient de requérir l'usage d'un équipement particulier, que ce soit un téléphone ou autre terminal personnel, un casque de réalité augmentée, voire même un robot. Il n'est donc pas possible de guider un individu si l'individu ou le lieu considéré ne dispose pas de ce type d'équipement, qui peut être coûteux.

Il existe donc un besoin pour une solution de guidage à l'intérieur d'un environnement tel qu'un bâtiment qui ne nécessite pas d'équipement additionnel.

Il est également connu de WO2015/082717 un procédé de guidage d'un individu dans un environnement comprenant la localisation de l'individu, l'individu étant associé à un signe d'identification dédié, et l'affichage sur des écrans d'informations de guidage pour guider l'individu jusqu'à la destination.

Il est également connu de US 2011/022201 un procédé de guidage d'un individu dans un environnement, comprenant l'émission d'un signal lumineux qui est choisi parmi un ensemble de signaux lumineux associés à des destinations différentes.

Il est également connu de US 2010/153003 un procédé de guidage d'un individu comprenant l'émission d'une information de guidage visuelle par un actionneur lorsque la présence de l'individu au voisinage de l'actionneur est détectée.

## Résumé

L'invention a pour objet un procédé selon la revendication 1, un dispositif selon la revendication 7, et un produit programme d'ordinateur selon la revendication 9. Des caractéristiques optionnelles de l'invention sont présentées dans les revendications dépendantes.

Le procédé de guidage proposé permet de tirer profit des nombreux actionneurs qui sont déjà couramment présents dans de nombreux bâtiments ou autres lieux, pour guider des individus sans nécessiter d'équipement supplémentaire. En effet, les actionneurs en place dans le lieu sont commandés pour guider l'individu sur son trajet jusqu'à sa destination.

De ce fait, le procédé de guidage est peu coûteux car il ne nécessite pas d'équipement supplémentaire, et il est simple d'accès à tous les individus puisqu'il ne nécessite pas de manipulation, par un individu, d'un équipement spécifique.

En outre, comme de nombreux lieux sont également déjà équipés de capteurs connectés, il est aussi possible de tirer profit de ces capteurs, quelle que soit leur nature (capteur de position, de mouvement, caméra, etc.), pour déterminer la progression de l'individu le long de son trajet, et ne commander que les actionneurs situés à proximité de l'individu ou restant sur ce qu'il reste de son trajet. Il est ainsi possible de mettre à profit des capteurs et des actionneurs présents dans l'environnement, même si ces capteurs ou actionneurs sont de technologies diverses, pour assurer le guidage de l'individu, sans avoir à modifier les installations de l'environnement pour respecter une technologie unique.

L'exploitation des capteurs de l'environnement permet également de recalculer le trajet pour pouvoir réaliser un guidage dynamique de l'individu tout au long de sa progression, ce qui permet d'éviter des erreurs de guidage et d'assurer à l'individu qu'il va parvenir à la destination voulue.

Le fait de calculer un trajet en fonction du modèle numérique du bâtiment permet une automatisation de la détermination du trajet avec une réduction de l'utilisation de ressources de calculs et de besoins mémoires. En effet, il n'est pas nécessaire de calculer à l'avance tous les trajets possibles au sein de l'environnement et de devoir associer à chaque trajet les actionneurs présents le long de ce trajet. En cas de modification de la géométrie de l'environnement, il est aussi plus aisé de calculer de nouveaux trajets puisqu'il suffit de modifier le modèle numérique du bâtiment, et pas de recalculer une liste de trajets possibles au sein de l'environnement modifié.

**Brève description des dessins**

D'autres caractéristiques, détails et avantages apparaîtront à la lecture de la description détaillée ci-après, et à l'analyse des dessins annexés, sur lesquels :

> **Fig. 1**

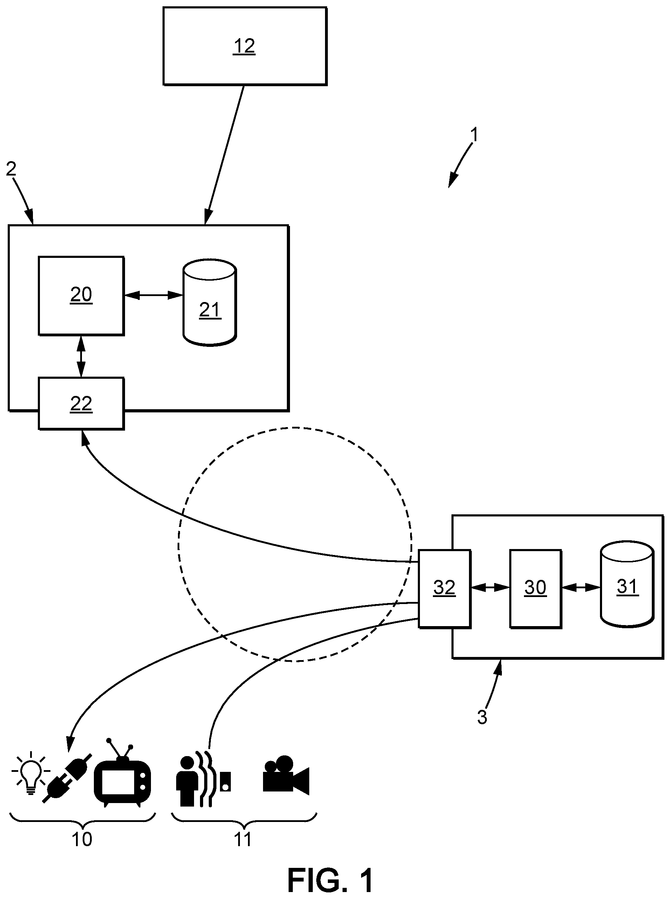

> [Fig. 1] représente un système de guidage selon un mode de réalisation.
> **Fig. 2**

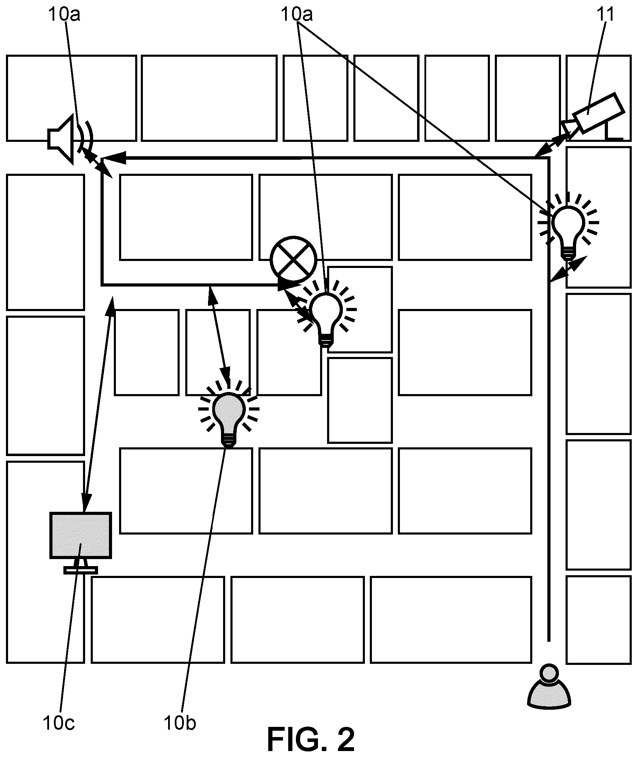

> [Fig. 2] représente un exemple de trajet dans un bâtiment et de sélection des actionneurs et/ou capteurs pouvant être commandés le long de ce trajet.
> **Fig. 3**

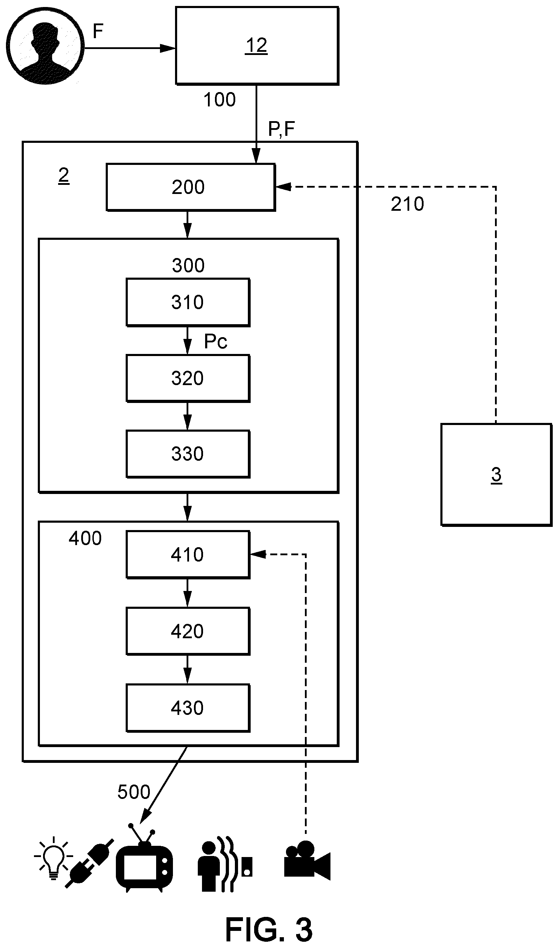

> [Fig. 3] représente schématiquement les principales étapes du procédé de guidage selon un mode de réalisation.
> **Fig. 4**

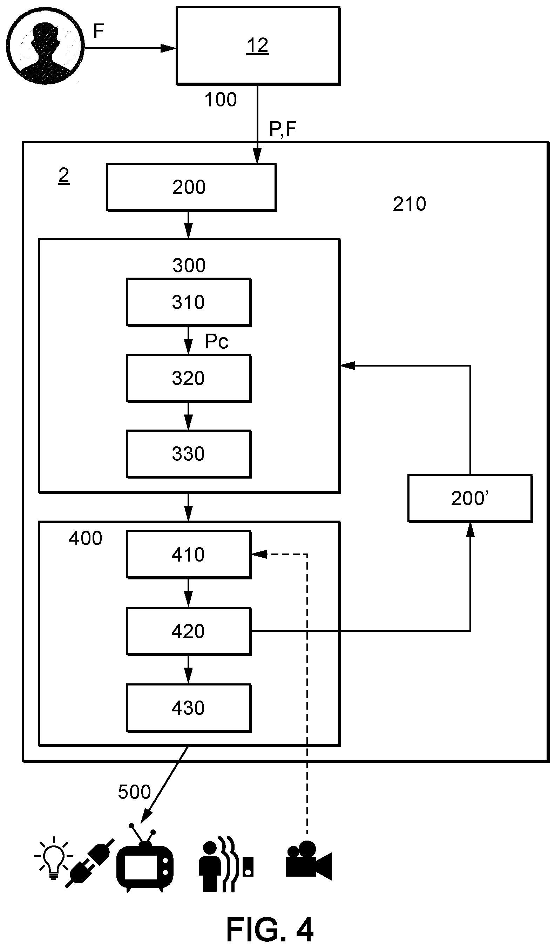

> [Fig. 4] représente schématiquement les principales étapes du procédé de guidage selon un autre mode de réalisation.

**Description des modes de réalisation**

On va maintenant décrire un procédé de guidage d'un individu dans un environnement. Cet environnement peut être un bâtiment ou un ensemble de bâtiments, comprenant éventuellement aussi des espaces extérieurs, comme par exemple une usine, un immeuble de bureaux, un centre hospitalier, un centre commercial, un parc d'attraction, une école ou un campus scolaire, etc.

En référence à la figure 2, l'environnement comprend au moins un, et de préférence une pluralité d'actionneurs 10, chaque actionneur étant apte à être commandé à distance. Dans un mode de réalisation, chaque actionneur est dit « connecté », c'est-à-dire qu'il comprend une interface de communication à distance, l'interface de communication étant adaptée pour connecter l'actionneur à un réseau de communication sans fil, tel qu'un réseau sans fil à faible consommation énergétique ou LPWAN ou tout autre réseau sans fil tel qu'un réseau mobile GSM, UMTS, LTE, 3G, 4G, 5G, etc. Chaque actionneur comprend en outre une électronique de contrôle comprenant au moins un calculateur - par exemple un microprocesseur, un processeur, un microcontrôleur, un FPGA, etc. - et une mémoire.

Les actionneurs 10 sont adaptés pour émettre une information sonore ou visuelle, quand ils sont activés. Selon un exemple non limitatif, un actionneur peut être un dispositif lumineux (lampe, spot, marquage lumineux ou au projecteur d'information au sol, au plafond ou sur un mur, écran de signalisation etc.), qui peut être commandé pour s'allumer, éventuellement selon une ou plusieurs couleurs particulières, pour clignoter, pour afficher un message particulier, etc., afin de guider l'individu jusqu'à sa destination. Un actionneur peut également être un dispositif sonore tel qu'un haut-parleur, et être commandé pour diffuser un message vocal, une musique, un ou plusieurs sons déterminés, permettant également de guider un individu jusqu'à sa destination.

Dans un mode de réalisation, l'environnement comprend également au moins un, et de préférence une pluralité de capteurs 11, chaque capteur étant apte à transmettre des données à distance. Dans un mode de réalisation, chaque capteur est dit « connecté », et comprend une interface de communication à distance (non représentée), l'interface de communication étant adaptée pour connecter le capteur à un réseau de communication sans fil, tel qu'un réseau sans fil à faible consommation énergétique ou LPWAN ou tout autre réseau sans fil tel qu'un réseau mobile GSM, UMTS, LTE, 3D, 4G, 5G, etc. Chaque capteur comprend en outre une électronique de contrôle comprenant au moins un calculateur, par exemple un microprocesseur, un processeur, un microcontrôleur, un FPGA, etc., et une mémoire.

Les capteurs 11 sont adaptés pour détecter la présence d'un individu, afin de permettre la localisation de l'individu, ou au moins une estimation de sa localisation, à partir des informations acquises par le capteur. Ainsi le capteur peut, selon des exemples non limitatifs, être une caméra, un détecteur de mouvement, un détecteur d'ouverture de seuil, un capteur de pression au sol, un interrupteur pouvant être actionné pour allumer une lumière ou ouvrir une porte, un capteur thermique, etc. Les capteurs 11 sont donc adaptés pour détecter la présence d'un individu sans action volontaire de la part de l'individu pour signaler sa présence auprès du capteur.

En référence à la figure 1, le procédé de guidage de l'individu dans l'environnement est mis en œuvre par un dispositif de guidage 2 comprenant au moins un calculateur 20, par exemple un processeur, un microprocesseur, un contrôleur, un microcontrôleur, etc., et une mémoire 21 stockant des instructions de code pour la mise en œuvre du procédé de guidage. Le dispositif de guidage 2 comprend également une interface 22 de connexion à un réseau de communication tel qu'un réseau mobile GSM, UMTS, LTE, 3G, 4G, 5G ou un réseau à faible consommation énergétique, cette interface permettant donc de communiquer à distance avec les actionneurs et les capteurs si des capteurs sont utilisés pour le guidage.

Dans un mode de réalisation, le dispositif de guidage est adapté pour communiquer à distance avec les actionneurs 10 et les capteurs 11 pour recevoir des données acquises par les capteurs et émettre des commandes d'activation des actionneurs. Dans un mode de réalisation, la récupération des données des capteurs et l'activation des actionneurs est réalisée par le dispositif de guidage. En variante représentée sur la figure 1, ces tâches sont réalisées par un serveur 3 dédié à la gestion de ces actionneurs et capteurs 11, et le serveur est adapté pour communiquer avec le dispositif de guidage pour transmettre les données acquises par les capteurs et/ou recevoir du dispositif de guidage des commandes d'activation des actionneurs. Le serveur 3 peut comprendre un calculateur 30 du type exposé ci-avant, une mémoire 31 et une interface de connexion 32 à un réseau de télécommunication tel qu'exposé ci-avant.

Comme décrit plus en détails ci-après, le guidage de l'individu est effectué à partir d'une représentation numérique en trois dimensions de l'environnement, également appelée jumeau numérique, comprenant également la localisation de chaque actionneur 10 et, s'il y en a, de chaque capteur 11. Ce jumeau numérique peut être stocké dans la mémoire 22 du dispositif de guidage ou, en variante, dans une mémoire 31 du serveur 3 de gestion des actionneurs et capteurs, ou peut encore être stockée dans un autre terminal du réseau de communication auquel est connecté le dispositif de guidage, de sorte que le dispositif de guidage puisse y accéder.

Dans un mode de réalisation, ce jumeau numérique de l'environnement comprend une reproduction en trois dimensions de la géométrie de l'environnement, qui peut être un maillage ou un nuage de points, et un graphe des zones dites navigables de l'environnement, c'est-à-dire qui correspondent à des zones de l'environnement où un individu peut se placer, par opposition à des zones dites non navigables, qui correspondent par exemple à des cloisons ou des lieux non accessibles à l'individu. Le graphe des zones navigables de l'environnement est obtenu à partir de la géométrie de l'environnement, en identifiant dans celle-ci les zones planes et/ou dépourvues d'obstacle. Dans un mode de réalisation, le graphe des zones navigables peut être obtenu par triangulation de Delaunay appliquée au maillage représentant la géométrie de l'environnement. On obtient ainsi l'ensemble des zones dites navigables de l'environnement. On pourra se référer pour plus de détails d'implémentation à la publication de F. Lamarche « TopoPlan : a topological path planner for real time human navigation under floor and ceiling constraints », HAL Id : inria-00432184.

La figure 3 représente schématiquement les principales d'un procédé de guidage mis en œuvre par le dispositif de guidage. Ce procédé comprend la réception 100, par le dispositif de guidage, d'un point de départ et d'un point de destination de l'individu au sein de l'environnement considéré.

Dans un mode de réalisation, l'environnement peut comprendre au moins une interface Homme Machine 12, adaptée pour communiquer avec le dispositif de guidage, l'interface permettant à un individu d'indiquer le point de destination F où il souhaite se rendre. Si cette interface Homme Machine 12 est fixe, la localisation de l'interface peut constituer le point de départ de l'individu D. Par exemple, une interface Homme Machine 12 peut se situer à un point d'entrée ou d'accueil de l'environnement.

Une fois reçus le point de départ et le point de destination, le dispositif de guidage détermine au cours d'une étape 200 un trajet au sein de l'environnement reliant le point de départ au point de destination. Cette détermination est réalisée à partir du jumeau numérique de l'environnement, auquel le dispositif de guidage accède ou qu'il récupère pour la mise en œuvre de cette étape. Dans le cas où le jumeau numérique est stocké dans une mémoire du serveur de gestion des actionneurs et des capteurs, celui-ci peut envoyer (210) au moins une partie du jumeau numérique, incluant les positions des actionneurs et le cas échéant des capteurs, au dispositif de guidage.

Dans un mode de réalisation, le trajet calculé par le dispositif de guidage est le plus court chemin entre le point de départ et le point de destination. Dans le cas où le modèle numérique de l'environnement comprend un graphe des zones navigables de l'environnement, une mise en œuvre possible de cette étape est l'algorithme appelé A*, qui parcourt le graphe des cellules navigables en partant de la cellule de départ jusqu'à parvenir à la cellule de destination, et qui est décrit dans la publication de P. Hart et al. « A Formal Basis for the Heuristic Determination of Minimum Cost Paths ».

De retour à la figure 2, le procédé comprend ensuite la détermination 300, à partir du trajet déterminé, d'un ensemble d'actionneurs 10a situés sur le trajet. Ces actionneurs 10a sont de préférence déterminés de sorte que l'individu parcourant le trajet puisse voir ou entendre ces actionneurs, c'est-à-dire que l'on détermine les actionneurs qui sont proches du trajet identifié.

Pour cela, dans un mode de réalisation, la détermination 300 de l'ensemble des actionneurs situés sur le trajet comprend, pour chaque actionneur 10 situé dans l'environnement et pouvant être commandé à distance, une identification 310 du point du trajet $P_c$ le plus proche de l'actionneur.

Dans un exemple de réalisation non limitatif, en notant $P_a$ la position de l'actionneur et $P_c$ la position du trajet la plus proche de $P_a$, et en considérant le chemin comme un ensemble de segment $[A_i, B_i]$, le point du trajet le plus proche de l'actionneur est déterminé en calculant la projection du point $P_a$ sur chaque segment $[A_i, B_i]$, notée $P_{ai}$, par :

$$P_{ai} = A_i + \overrightarrow{A_i B_i} \times \frac{\overrightarrow{A_i P_a} . \overrightarrow{A_i B_i}}{\overrightarrow{A_i B_i} . \overrightarrow{A_i B_i}}$$

Et on choisit $P_c$ comme étant la valeur de $P_{ai}$ qui minimise $[P_a, P_{ai}]$.

Une fois le point du trajet le plus proche de l'actionneur déterminé, un lancer de rayon est mis en œuvre 320 dans la reproduction de la géométrie de l'environnement, à partir de l'actionneur et en direction du point du chemin le plus proche, de manière à déterminer si un obstacle se trouve dans le modèle de l'environnement entre l'actionneur et le point du chemin le plus proche. Le rayon ainsi généré s'étend donc depuis la position de l'actionneur selon une direction définie par $\overrightarrow{P_aP_c}$.

Si aucun obstacle n'est présent entre l'actionneur le point du trajet le plus proche, alors l'actionneur 10 est ajouté 330 à l'ensemble des actionneurs 10a considérés comme étant sur le trajet. Sur la figure 3, on a représenté les actionneurs 10a identifiés comme étant sur le trajet, et des actionneurs 10b identifiés comme n'étant pas sur le trajet car il existe un obstacle entre l'actionneur et le point du trajet le plus proche.

Dans un mode de réalisation, un actionneur doit en outre être à une distance du trajet, c'est-à-dire à une distance du point du trajet le plus proche de l'actionneur, inférieur à un seuil déterminé, pour être ajouté à la liste des actionneurs considérés comme étant sur le trajet. Sur la figure 2, on a par exemple représenté le cas d'un écran 10c trop éloigné du trajet.

Une fois que l'ensemble des actionneurs situés sur le trajet est déterminé, le procédé comprend l'émission 500 d'une commande d'activation d'au moins l'un de ces actionneurs, pour guide l'individu le long du trajet et jusqu'à sa destination. Dans un mode de réalisation, la commande d'activation est générée pour tous les actionneurs, ce qui permet de réaliser un marquage du trajet à suivre au sein de l'environnement quelle que soit la position de l'utilisateur.

En variante, et notamment dans le cas où l'environnement comprend en outre des capteurs 11, la commande d'activation peut n'être générée que pour un sous-ensemble d'actionneurs qui sont préalablement sélectionnés en fonction d'une position, ou d'une estimation de la position de l'individu dans l'environnement.

Dans ce cas, une sélection 400 des actionneurs à activer peut comprendre la réception 410 d'au moins une information de présence d'un individu acquise par un capteur, et la détermination 420, à partir de l'information de présence reçue, d'une estimation de la position de l'individu dans l'environnement. En particulier, la position et la nature du capteur donnent une indication de la position de l'individu au moment où sa présence est détectée par le capteur. Dans le cas où il existe un intervalle de temps entre ce moment et le moment où l'information de présence est reçue par le dispositif de guidage, l'intervalle de temps peut être exploité pour en déduire, à partir d'une vitesse moyenne d'un individu en train de marcher par exemple, une estimation de sa position actuelle.

En fonction de la position estimée de l'individu, le dispositif de guidage peut sélectionner 430 un sous-ensemble d'actionneurs situés entre la position estimée de l'individu et son point de destination. En variante, le dispositif de guidage peut ne sélectionner 430 qu'un sous-ensemble, parmi les actionneurs situés sur le trajet, d'actionneurs situés à une distance inférieure à un premier seuil. En d'autres termes, cela permet de guider un individu au fur et à mesure qu'il parcourt le trajet. Dans ce cas, le dispositif de guidage peut émettre une commande d'extinction, ou une commande d'activation modifiée des actionneurs que l'individu a déjà dépassés, pour limiter l'énergie consommée par les actionneurs et/ou permettre ensuite d'activer à nouveau les actionneurs pour une autre personne. Dans un mode de réalisation, un actionneur peut cependant ne pas être sélectionné si, bien que situé entre la position estimée de l'individu et son point de destination, il se situe à une distance de la position de l'individu inférieure à un deuxième seuil déterminé, inférieur au premier. En effet, l'actionnement soudain d'un actionneur situé à proximité immédiate d'un individu n'est pas souhaitable car cela peut surprendre ou effrayer l'individu.

Si plusieurs individus ont besoin d'être guidés simultanément au sein de l'environnement, le dispositif de guidage est avantageusement adapté pour générer des commandes d'activation différentes d'au moins certains actionneurs pour chaque individu, c'est-à-dire qu'un même actionneur n'est pas activé de la même manière pour deux individus différents. Ceci permet de réaliser un guidage personnalisé de chaque individu, pour éviter qu'un individu ne suive le trajet d'un autre individu. Par exemple, des actionneurs peuvent être formés par des bandeaux de leds de différentes couleurs, et la commande d'activation du dispositif de guidage porte sur une couleur différente pour chaque individu, qui aura été communiquée à cet individu. En variante, des haut-parleurs peuvent diffuser un message spécifique à un individu, et dans le cas où un même haut-parleur est activé pour plusieurs individus, il peut être commandé pour diffuser successivement des messages propres à chaque individu.

Il en résulte qu'une fois qu'un individu a précisé son point de départ et son point de destination, il n'a plus qu'à suivre les indications des actionneurs, comme par exemple un trajet lumineux, pour parvenir à sa destination.

En référence à la figure 4, lorsque l'environnement comprend un ensemble de capteurs 11 de présence de l'individu comme décrit ci-avant, les informations de présence acquises par les capteurs peuvent être utilisées pour mettre en œuvre un guidage dynamique de l'individu au sein de l'environnement. Ce guidage dynamique comprend le calcul 200' d'une mise à jour du trajet de l'individu, entre un point qui correspond à une estimation de la position de l'individu dans l'environnement réalisée à partir des mesures des capteurs, et le point de destination. Ce calcul du nouveau trajet est mis en œuvre de la même façon que le calcul du trajet initial décrit à l'étape 200 ci-dessus, c'est-à-dire à partir du modèle numérique de l'environnement.

Une fois le trajet recalculé, les étapes 300 à 500 décrites précédemment sont également applicables.

Ce guidage dynamique est avantageux notamment dans le cas où les informations acquises par les capteurs de présence permettent de détecter que l'individu ne se trouve pas sur le trajet initial calculé. Il est ainsi possible de recalculer un trajet permettant de le ramener vers la destination, et éviter ainsi que l'individu ne se perde.

Ainsi dans l'exemple de réalisation représenté sur la figure 4, le procédé comprend le calcul 200 d'un trajet initial entre un point de départ de l'individu et le point de destination, la détermination 300 d'un ensemble d'actionneurs situés sur le trajet à activer, et l'émission 500 d'une commande d'activation de ces actionneurs. Le procédé comprend également, lors de la progression de l'individu par l'environnement, la réception 410 d'informations de présence de l'individu dans l'environnement à partir des mesures des capteurs, l'estimation 420 d'une position de l'individu dans l'environnement à partir desdites informations et, si la position estimée ne se trouve pas sur le trajet initial, le calcul 200' d'un nouveau trajet entre la position estimée et la destination, et la mise en œuvre des étapes 300, 500, et le cas échéant 400 à partir de ce nouveau trajet.

Dans cette variante également, et bien que cela ne soit pas représenté, le système mettant en œuvre le guidage comprend un dispositif de guidage 2 calculant le trajet et émettant une commande d'activation des actionneurs situés sur le trajet, et un dispositif de gestion 3 des actionneurs activant les actionneurs conformément à cette commande.

## Revendications

1. Procédé de guidage d'un individu dans un environnement comprenant au moins un actionneur (10) apte à être commandé à distance et adapté pour émettre une information sonore ou visuelle, et un ensemble de capteurs de présence (11) d'individu apte à transmettre des données à distance, les capteurs étant aptes à détecter la présence d'un individu sans action volontaire de l'individu pour signaler sa présence, le procédé étant mis en œuvre par un calculateur (20), et comprenant :

   - la détermination (200), à partir d'un point courant parmi un point de départ et une position estimée de l'individu dans l'environnement à partir des capteurs, et d'un point de destination de l'individu dans l'environnement, et d'un modèle numérique de l'environnement comprenant la localisation de chaque actionneur, d'un trajet au sein de l'environnement reliant le point courant et le point de destination,
   - à partir du trajet déterminé, la détermination (300) d'un ensemble d'actionneurs (10a) situés sur le trajet, comprenant la mise en œuvre, pour chaque actionneur (10) de l'environnement, de :

      ○ une identification (310) du point du trajet le plus proche ($P_c$) de l'actionneur,

      ○ la mise en œuvre (320), dans le modèle de l'environnement, d'un lancer de rayon entre l'actionneur et le point du trajet le plus proche, et,

      ○ l'ajout (330) de l'actionneur à l'ensemble si aucun obstacle n'est présent entre l'actionneur et le point du trajet le plus proche, et

   - l'émission (500) d'une commande d'activation d'au moins un actionneur (10a) de l'ensemble pour guider l'individu le long du trajet.

2. Procédé selon la revendication 1, dans lequel la détermination (300) des actionneurs situés sur le trajet comprend en outre le calcul d'une distance entre chaque actionneur de l'environnement et le point du trajet le plus proche, et l'ajout de l'actionneur à l'ensemble si la distance est inférieure à un seuil prédéterminé.

3. Procédé selon l'une des revendications précédentes, comprenant en outre, avant l'émission de la commande d'activation, une sélection (400), parmi l'ensemble des actionneurs (10a) situés sur le trajet, d'au moins un actionneur à commander, en fonction d'une estimation de la position de l'individu.

4. Procédé selon la revendication précédente, dans lequel la sélection (400) d'un actionneur à commander comprend :

   - la réception (410) d'une information de présence de l'individu de l'environnement, acquise par au moins un capteur de présence,
   - la détermination (420), à partir de l'information de présence reçue, d'une estimation de la position de l'individu dans l'environnement,
   - la sélection (430) d'au moins un actionneur situé sur le trajet, entre la position estimée de l'individu et le point de destination.

5. Procédé selon l'une des revendications précédentes, comprenant en outre l'estimation d'une position de l'individu dans l'environnement à partir de données acquises par les capteurs (11) et, si l'individu se situe hors du trajet calculé, le calcul (200') d'un nouveau trajet entre la position estimée de l'individu et le point de destination.

6. Procédé selon l'une des revendications précédentes, comprenant le guidage simultané de plusieurs individus, et la génération d'une commande d'activation des actionneurs différente pour chaque individu à guider.

7. Dispositif de guidage (2) d'un individu dans un environnement comprenant au moins un actionneur (10) apte à être commandé à distance et adapté pour émettre une information sonore ou visuelle, et un ensemble de capteurs de présence (11) d'individu aptes à transmettre des données à distance, les capteurs étant aptes à détecter la présence d'un individu sans action volontaire de l'individu pour signaler sa présence, le dispositif de guidage (2) comprenant au moins un calculateur (20), et étant **caractérisé en ce qu'**il est configuré pour mettre en œuvre le procédé selon l'une des revendications précédentes.

8. Dispositif de guidage (2) selon la revendication précédente, comprenant en outre une mémoire (21) stockant le modèle numérique de l'environnement.

9. Produit programme d'ordinateur, comprenant des instructions de code pour la mise en œuvre du procédé selon l'une des revendications 1 à 6, quand il est exécuté par un calculateur.

10. Système (1) de guidage d'un individu dans un environnement comprenant :

    - au moins un actionneur (10) situé dans l'environnement, apte à être commandé à distance et adapté pour émettre une information sonore ou visuelle,
    - au moins un capteur (11) de présence d'un individu, apte à détecter la présence de l'individu sans action volontaire de l'individu pour signaler sa présence, et apte à transmettre des données à distance, et
    - un dispositif de guidage (2) selon la revendication 7 ou 8.

11. Système de guidage d'un individu selon la revendication précédente, comprenant en outre un dispositif de gestion (3) des actionneurs comprenant au moins un calculateur (30), une mémoire (31) stockant un modèle numérique de l'environnement et l'emplacement de chaque actionneur (10), et une interface de communication à distance (32) avec chaque actionneur (10), le dispositif de gestion des actionneurs étant adapté pour :

    - envoyer au dispositif de guidage au moins une partie du modèle numérique de l'environnement et des localisations des actionneurs situés dans l'environnement,
    - recevoir, du dispositif de guidage, une commande d'activation d'au moins un actionneur, et
    - activer au moins un actionneur conformément à la commande reçue.

12. Système de guidage d'un individu selon l'une des revendications 10 ou 11, dans lequel l'actionneur est adapté pour émettre une information visible ou sonore lorsqu'il est activé.

## Patentansprüche

1. Verfahren zur Führung einer Person in einer Umgebung, umfassend mindestens einen Aktor (10), der geeignet ist, ferngesteuert zu werden, und dazu angepasst ist, eine akustische oder visuelle Information auszugeben, und eine Anordnung von Sensoren (11) für die Anwesenheit einer Person, die geeignet ist, Daten fernzuübertragen, wobei die Sensoren geeignet sind, die Anwesenheit einer Person ohne bewusste Aktion der Person zum Signalisieren ihrer Anwesenheit zu detektieren, wobei das Verfahren von einem Rechner (20) durchgeführt wird und umfasst:

    - das Ermitteln (200), ausgehend von einem aktuellen Punkt unter einem Ausgangspunkt und einer ausgehend von den Sensoren geschätzten Position der Person in der Umgebung und von einem Zielpunkt der Person in der Umgebung und von einem digitalen Modell der Umgebung, das den Standort jedes Aktors umfasst, einer Route in der Umgebung, die den aktuellen Punkt und den Zielpunkt verbindet,
    - ausgehend von der ermittelten Route, das Ermitteln (300) einer Anordnung von Aktoren (10a), die auf der Route gelegen sind, umfassend das Durchführen, für jeden Aktor (10) der Umgebung, von Folgendem:

        ◦ eine Identifizierung (310) des zu dem Aktor nächstgelegenen Punkts ($P_c$) der Route,
        ◦ die Durchführung (320), in dem Modell der Umgebung, eines Raytracing zwischen dem Aktor und dem nächstgelegenen Punkt der Route, und
        ◦ das Hinzufügen (330) des Aktors zu der Anordnung, wenn kein Hindernis zwischen dem Aktor und dem nächstgelegenen Punkt der Route vorhanden ist, und

    - das Ausgeben (500) eines Befehls zur Aktivierung mindestens eines Aktors (10a) der Anordnung, um die Person entlang der Route zu führen.

2. Verfahren nach Anspruch 1, wobei das Ermitteln (300) der auf der Route gelegenen Aktoren ferner das Berechnen einer Entfernung zwischen jedem Aktor der Entfernung und dem nächstgelegenen Punkt der Route umfasst und das Hinzufügen des Aktors zu der Anordnung, wenn die Entfernung geringer als ein vorbestimmter Schwellenwert ist.

3. Verfahren nach einem der vorhergehenden Ansprüche, umfassend ferner, vor dem Ausgeben des Befehls zur Aktivierung, ein Auswählen (400), aus der Anordnung der auf der Route gelegenen Aktoren (10a), mindestens eines in Abhängigkeit von einer Schätzung der Position der Person zu steuernden Aktors.

4. Verfahren nach dem vorhergehenden Anspruch, wobei das Auswählen (400) eines zu steuernden Aktors umfasst:

 - das Empfangen (410) einer Information zur Anwesenheit der Person von der Umgebung, die von mindestens einem Anwesenheitssensor erfasst wird,
 - das Ermitteln (420), ausgehend von der empfangenen Information zur Anwesenheit, einer Schätzung der Position der Person in der Umgebung,
 - das Auswählen (430) mindestens eines Aktors, der auf der Route zwischen der geschätzten Position der Person und dem Zielpunkt gelegen ist.

5. Verfahren nach einem der vorhergehenden Ansprüche, umfassend ferner das Schätzen einer Position der Person in der Umgebung ausgehend von Daten, die von den Sensoren (11) erfasst werden, und, wenn die Person sich außerhalb der berechneten Route befindet, das Berechnen (200') einer neuen Route zwischen der geschätzten Position der Person und dem Zielpunkt.

6. Verfahren nach einem der vorhergehenden Ansprüche, umfassend das gleichzeitige Führen von mehreren Personen und das Erzeugen eines separaten Befehls zur Aktivierung der Aktoren für jede zu führende Person.

7. Vorrichtung zur Führung (2) einer Person in einer Umgebung, umfassend mindestens einen Aktor (10), der geeignet ist, ferngesteuert zu werden, und dazu angepasst ist, eine akustische oder visuelle Information auszugeben, und eine Anordnung von Sensoren (11) für die Anwesenheit einer Person, die geeignet sind, Daten fernzuübertragen, wobei die Sensoren geeignet sind, die Anwesenheit einer Person ohne bewusste Aktion der Person zum Signalisieren ihrer Anwesenheit zu detektieren, wobei die Vorrichtung zur Führung (2) mindestens einen Rechner (20) umfasst und **dadurch gekennzeichnet ist, dass** sie dazu ausgestaltet ist, das Verfahren nach einem der vorhergehenden Ansprüche durchzuführen.

8. Vorrichtung zur Führung (2) nach dem vorhergehenden Anspruch, umfassend ferner einen Speicher (21), der das digitale Modell der Umgebung speichert.

9. Computerprogrammprodukt, das Codeanweisungen umfasst, die bei seiner Ausführung durch einen Rechner das Verfahren nach einem der Ansprüche 1 bis 6 durchführen.

10. System (1) zur Führung einer Person in einer Umgebung, umfassend:

 - mindestens einen in der Umgebung gelegenen Aktor (10), der geeignet ist, ferngesteuert zu werden, und dazu angepasst ist, eine akustische oder visuelle Information auszugeben,
 - mindestens einen Sensor (11) für die Anwesenheit einer Person, der geeignet ist, die Anwesenheit der Person ohne bewusste Aktion der Person zur Signalisierung ihrer Anwesenheit zu detektieren, und geeignet ist, Daten fernzuübertragen, und
 - eine Vorrichtung zur Führung (2) nach Anspruch 7 oder 8.

11. System zur Führung einer Person nach dem vorhergehenden Anspruch, umfassend ferner eine Vorrichtung (3) zur Verwaltung der Aktoren, umfassend mindestens einen Rechner (30), einen Speicher (31), der ein digitales Modell der Umgebung und den Ort jedes Aktors (10) speichert, und eine Schnittstelle (32) zur Fernkommunikation mit jedem Aktor (10), wobei die Vorrichtung zur Verwaltung der Aktoren dazu angepasst ist:

 - an die Vorrichtung zur Führung mindestens einen Teil des digitalen Modells der Umgebung und der Standorte der in der Umgebung gelegenen Aktoren zu senden,
 - von der Vorrichtung zur Führung einen Befehl zur Aktivierung mindestens eines Aktors zu empfangen, und
 - mindestens einen Aktor gemäß dem empfangenen Befehl zu aktivieren.

12. System zur Führung einer Person nach einem der Ansprüche 10 oder 11, wobei der Aktor dazu angepasst ist, eine visuelle oder akustische Information auszugeben, wenn er aktiviert wird.

**Claims**

1. Method for guiding an individual in an environment comprising at least one actuator (10) able to be controlled remotely and designed to output acoustic or visual information, and a set of individual-presence sensors (11) able to transmit data remotely, the sensors being able to detect the presence of an individual without the individual performing a deliberate action to signal their presence, the method being implemented by a computer (20) and comprising:

- based on a current point from among a starting point and a position of the individual in the environment as estimated based on the sensors, and on a destination point of the individual in the environment, and on a digital model of the environment comprising the location of each actuator, determining (200) a path within the environment connecting the current point and the destination point,

- based on the determined path, determining (300) a set of actuators (10a) located on the path, comprising implementing the following for each actuator (10) in the environment:

  ○ identifying (310) the point ($P_c$) of the path closest to the actuator,
  ○ implementing (320), in the model of the environment, ray tracing between the actuator and the closest point of the path, and
  ○ adding (330) the actuator to the set if no obstacle is present between the actuator and the closest point of the path, and

- outputting (500) a command to activate at least one actuator (10a) of the set so as to guide the individual along the path.

2. Method according to Claim 1, wherein determining (300) the actuators located on the path furthermore comprises computing a distance between each actuator in the environment and the closest point of the path, and adding the actuator to the set if the distance is less than a predetermined threshold.

3. Method according to either of the preceding claims, furthermore comprising, before outputting the activation command, selecting (400), from among the set of actuators (10a) located on the path, at least one actuator to be controlled on the basis of an estimate of the position of the individual.

4. Method according to the preceding claim, wherein selecting (400) an actuator to be controlled comprises:

- receiving (410) presence information concerning the presence of the individual in the environment, acquired by at least one presence sensor,
- determining (420), based on the received presence information, an estimate of the position of the individual in the environment,
- selecting (430) at least one actuator located on the path, between the estimated position of the individual and the destination point.

5. Method according to one of the preceding claims, furthermore comprising estimating a position of the individual in the environment based on data acquired by the sensors (11) and, if the individual is located outside of the computed path, computing (200') a new path between the estimated position of the individual and the destination point.

6. Method according to one of the preceding claims, comprising simultaneously guiding multiple individuals, and generating a different actuator activation command for each individual to be guided.

7. Guidance device (2) for guiding an individual in an environment comprising at least one actuator (10) able to be controlled remotely and designed to output acoustic or visual information, and a set of individual-presence sensors (11) able to transmit data remotely, the sensors being able to detect the presence of an individual without the individual performing a deliberate action to signal their presence, the guidance device (2) comprising at least one computer (20) and being **characterized in that** it is configured to implement the method according to one of the preceding claims.

8. Guidance device (2) according to the preceding claim, furthermore comprising a memory (21) that stores the digital model of the environment.

9. Computer program product comprising code instructions for implementing the method according to one of Claims 1 to 6 when it is executed by a computer.

10. Guidance system (1) for guiding an individual in an environment, comprising:

- at least one actuator (10) located in the environment, able to be controlled remotely and designed to output acoustic or visual information,
- at least one presence sensor (11) for sensing the presence of an individual, able to detect the presence of the individual without the individual performing a deliberate action to signal their presence, and able to transmit data remotely, and
- a guidance device (2) according to Claim 7 or 8.

11. Guidance system for guiding an individual according to the preceding claim, furthermore comprising an actuator management device (3) comprising at least one computer (30), a memory (31) that stores a digital model of the environment and the location of each actuator (10), and a remote communication interface (32) for remote communication with each actuator (10), the actuator management device being designed to:

- send, to the guidance device, at least part of the digital model of the environment and locations of the actuators located in the environment,
- receive, from the guidance device, a command to activate at least one actuator, and
- activate at least one actuator in accordance with the received command.

**12.** Guidance system for guiding an individual according to either of Claims 10 and 11, wherein the actuator is designed to output visible or acoustic information when it is activated.

**FIG. 1**

FIG. 2

FIG. 3

**FIG. 4**

## RÉFÉRENCES CITÉES DANS LA DESCRIPTION

**Documents brevets cités dans la description**

- JP 2011021971 B
- WO 2015082717 A
- US 2011022201 A
- US 2010153003 A

**Littérature non-brevet citée dans la description**

- **P. HART et al.** *A Formal Basis for the Heuristic Determination of Minimum Cost Paths*